(19) Europäisches Patentamt
European Patent Office
Office européen des brevets

(11) **EP 2 731 841 B1**

(12) **EUROPEAN PATENT SPECIFICATION**

(45) Date of publication and mention
of the grant of the patent:
**07.10.2020 Bulletin 2020/41**

(21) Application number: **12814454.0**

(22) Date of filing: **03.07.2012**

(51) Int Cl.:
*B60K 6/48* $^{(2007.10)}$       *B60W 10/02* $^{(2006.01)}$
*B60W 10/06* $^{(2006.01)}$       *B60W 10/08* $^{(2006.01)}$
*B60W 20/00* $^{(2016.01)}$       *B60W 30/18* $^{(2012.01)}$
*B60W 20/10* $^{(2016.01)}$       *B60W 30/186* $^{(2012.01)}$

(86) International application number:
**PCT/SE2012/050767**

(87) International publication number:
**WO 2013/012379 (24.01.2013 Gazette 2013/04)**

(54) **PARALLEL HYBRID SYSTEM AND METHOD PERTAINING TO A PARALLEL HYBRID SYSTEM**

PARALLELHYBRIDSYSTEM UND VERFAHREN FÜR EIN PARALLELHYBRIDSYSTEM

SYSTÈME HYBRIDE PARALLÈLE ET PROCÉDÉ SE RAPPORTANT À UN SYSTÈME HYBRIDE PARALLÈLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.07.2011 SE 1150684**

(43) Date of publication of application:
**21.05.2014 Bulletin 2014/21**

(73) Proprietor: **Scania CV AB**
**151 87 Södertälje (SE)**

(72) Inventors:
• **PETTERSSON, Niklas**
**S-117 30 Stockholm (SE)**
• **LINDSTRÖM, Johan**
**S-611 37 Nyköping (SE)**

(74) Representative: **Scania CV AB**
**Patents, GP 117kv**
**151 87 Södertälje (SE)**

(56) References cited:
EP-A1- 1 862 364        EP-A1- 1 975 027
WO-A1-2004/028848       DE-A1-102004 040 315
DE-A1-102007 041 570    DE-A1-102007 055 785
DE-A1-102008 044 248    GB-A- 2 346 123
US-A- 5 713 814         US-A- 6 054 776

**Description**

TECHNICAL FIELD

The present invention relates to a method pertaining to a parallel hybrid system for propulsion of a motor vehicle comprising a combustion engine in combination with an electrical machine configuration which includes an electrical machine provided with power supply. The invention relates also to a computer programme product containing programme code for a method according to the invention. The invention relates also to a parallel hybrid system for propulsion of a motor vehicle comprising a combustion engine in combination with an electrical machine configuration which includes an electrical machine provided with power supply, and to a motor vehicle which is equipped with the parallel hybrid system.

BACKGROUND

In today's vehicles it is becoming increasingly usual to use various types of hybrid techniques, e.g. so-called series hybrid systems and so-called parallel hybrid systems.

A parallel hybrid system comprises a combustion engine which has an output shaft connected to a mechanical clutch. The clutch is also connected to an input shaft of a gearbox. The gearbox has an output shaft connected to a torque distributor for conveying power to a number of powered wheels via respective driveshafts. The parallel hybrid system further comprises an electrical machine associated with the gearbox input shaft. The electrical machine is connected electrically to a battery. A control system of the vehicle may be adapted to running the parallel hybrid system in suitable ways, i.e. to distributing, during operation with chosen gear steps engaged in the gearbox of the vehicle, the torque respectively provided by the combustion engine and the electrical machine which is supplied with power by the battery. The electrical machine can in a conventional way, during operation with chosen gear steps engaged in the vehicle's gearbox, serve as a generator to charge the battery during braking of the vehicle.

DE 10 2007 055 785 describes a parallel hybrid system of a motor vehicle comprising a combustion engine which has an output shaft connected to a mechanical clutch. The clutch is also connected to an input shaft of a gearbox. The gearbox has an output shaft adapted to conveying torque to a number of powered wheels via respective driveshafts. The parallel hybrid system further comprises an electrical machine associated with the gearbox input shaft. The electrical machine is connected electrically to a battery. When inching, the vehicle is propelled primarily by the combustion engine via the mechanical clutch and secondarily by the electrical machine, e.g. to prevent an overheated mechanical clutch.

EP1862364 describes a parallel hybrid vehicle. The vehicle comprises a power train consisting of a combustion engine E, a first clutch (CL1), an electrical machine MG and a second clutch (CL2). Depending on the position of the first clutch (CL1), the vehicle may be propelled in different ways, viz. electrical operation, hybrid operation and slipping operation. Slipping operation may be used during inching. During slipping operation both the electrical machine and the combustion engine may be used to propel the vehicle.

DE102007041570A describes a method and a parallel hybrid system in accordance with the preamble of the independent claims.

SUMMARY OF THE INVENTION

Although there are now parallel hybrid systems which work well, vehicle manufacturers are constantly endeavouring to improve the performance of their vehicles while at the same time taking into account the costs which this involves. It is for example desirable for them to provide improved parallel hybrid systems which are not too complex and expensive to manufacture and maintain. It is also desirable to improve the performance of a parallel hybrid system during a phase of initial movement of the vehicle, in order thereby to minimise energy losses in the parallel hybrid system.

An object of the present invention is to propose a novel and advantageous method pertaining to a parallel hybrid system.

Another object of the invention is to propose a novel and advantageous parallel hybrid system and a novel and advantageous computer programme pertaining to a parallel hybrid system.

A further object of the invention is to propose a method, a parallel hybrid system and a computer programme for achieving an improved initial movement phase for a motor vehicle.

A further object of the invention is to propose a method, a parallel hybrid system and a computer programme for achieving a more environmentally friendly initial movement phase for a motor vehicle.

A further object of the invention is to propose a method pertaining to a parallel hybrid system, a parallel hybrid system and a computer programme for achieving an initial movement phase for a motor vehicle whereby energy losses of the parallel hybrid system are reduced.

These objects are achieved with a method pertaining to a parallel hybrid system for propulsion of a motor vehicle comprising a combustion engine in combination with an electrical machine configuration which includes an electrical machine provided with power supply, according to claim 1.

An aspect of the invention proposes a method pertaining to a parallel hybrid system for propulsion of a motor vehicle comprising a combustion engine in combination with an electrical machine configuration which includes an electrical machine provided with power supply. The method comprises the step, during an initial movement phase of the vehicle's propulsion, of using both the combustion engine and the electrical machine of the electrical machine configuration to propel the vehicle.

The result is an initial movement phase in which energy losses of the parallel hybrid system are reduced. Tests in the course of the inventive process showed that energy losses during an initial movement phase can be reduced substantially if both the combustion engine and the electrical machine of the electrical machine configuration are used to propel the vehicle

The result is a more environmentally friendly initial movement phase for a motor vehicle which is equipped with the parallel hybrid system, since stored electrical energy is used to run the vehicle in addition to driving torque generated by the combustion engine, as opposed to using only driving torque generated by the combustion engine. The amount of the vehicle's emissions during the initial movement phase can thus be reduced.

Improved performance of the vehicle equipped with the parallel hybrid system is thus achieved, since wear on a clutch associated with an input shaft of the vehicle's gearbox is avoided or reduced during said initial movement phase.

Said initial movement phase may refer to a state before full propulsion takes place with chosen gear in the vehicle's power train. In other words, said initial movement phase comprises a state when a clutch in the power train is sliding together.

Said initial movement phase may comprise a state from when the vehicle moves off from stationary to when the clutch has slid together.

Said initial movement phase may comprise a state when the vehicle travels at a speed within a predetermined range, e.g. 0-5 km/h, 0.0-3.0 km/h or 1-3 km/h. Said initial movement phase may comprise a state when the vehicle travels at a speed not exceeding a predetermined threshold value, e.g. 2 km/h. Said initial movement phase may comprise the vehicle being stationary.

After said initial movement phase the vehicle may be run according to ordinary running routines, i.e. on torque from the combustion engine, torque from the electrical machine configuration or torque from both of these power sources.

The electrical machine of the electrical machine configuration may act upon an input shaft of a gearbox in the vehicle's power train, and vice versa. This means that the electrical machine can serve both as a motor to impart torque to an input shaft of a gearbox in the vehicle's transmission and as a generator to charge an energy store of the electrical machine configuration.

The method may further comprise the step of continuously distributing torque extracted respectively from the combustion engine and from said electrical machine on the basis of the speed of the electrical machine. The total energy losses of the hybrid system can thus be reduced, which is advantageous from many perspectives. Said energy losses primarily comprise heat losses, e.g. in the clutch. Robust and reliable distribution of torque extracted from the respective power sources (combustion engine, energy store of the electrical machine) is also achieved. This distribution of torque extracted may be effected in any suitable way. In one example, where a prevailing speed of the electrical machine is above a predetermined threshold value, more torque can be extracted from the engine. Conversely, less torque can be extracted from the engine if the prevailing speed of the electrical machine is below said predetermined threshold value.

In one version the speed of the electrical machine may be calculated on the basis of the vehicle's prevailing running speed and a known gear ratio in the gearbox.

In another version, the electrical machine may be provided with a fixed gear ratio with respect to an input shaft of the gearbox. This makes it possible for the speed of the electrical machine to be calculated on the basis of the vehicle's running speed and a known gear ratio in the gearbox.

The method may further comprise the step of continuously distributing torque extracted respectively from the combustion engine and said electrical machine on the basis of a prevailing state of an energy store of the electrical machine configuration. Said state may pertain to a temperature of said energy store. It may pertain to a level of charge of said energy store. It may pertain to a degree of ageing of said energy store. The result is robust and reliable distribution of torque extracted from the respective power sources (combustion engine, energy store of the electrical machine configuration). This torque distribution may be effected in any suitable way.

In one example, where a prevailing temperature of the energy store is above a predetermined threshold value, more torque can be extracted from the engine. Conversely, less torque can be extracted from the engine if a prevailing temperature of the energy store is below said predetermined threshold value.

In one example, where a prevailing level of charge is below a predetermined threshold value, more torque can be extracted from the engine. Conversely, less torque can be extracted from the engine if a prevailing level of charge is above said predetermined threshold value.

The method may further comprise the step of continuously distributing torque extracted respectively from the combustion engine and said electrical machine on the basis of a prevailing temperature of the electrical machine of the electrical machine configuration. The result is robust and reliable distribution of torque extracted from the respective power sources (combustion engine, energy store of the electrical machine configuration). This torque distribution may be effected in any suitable way. In one example, where a prevailing temperature of the electrical machine is above a predetermined threshold value, more torque can be extracted from the engine. Conversely, less torque can be extracted from the engine if a prevailing temperature of the electrical machine is below said predetermined threshold value.

The method may further comprise the step of continuously distributing torque extracted respectively from the combustion engine and said electrical machine on the basis of a prevailing temperature of a clutch in the vehicle's power train. The result is robust and reliable distribution of torque extracted from the respective power sources (combustion engine, energy store of the electrical machine configuration). This torque distribution may be effected in any suitable way. In one example, where a prevailing temperature of the clutch is above a predetermined threshold value, less torque can be extracted from the engine. Conversely, more torque can be extracted from the engine if a prevailing temperature of the clutch is below said predetermined threshold value.

The method may further comprise the step of continuously distributing torque extracted respectively from the combustion engine and said electrical machine on the basis of prevailing wear of a clutch in the vehicle's power train. The result is robust and reliable distribution of torque extracted from the respective power sources (combustion engine, energy store of the electrical machine configuration). This torque distribution may be effected in any suitable way. In one example, where prevailing wear of the clutch is above a predetermined threshold value, less torque can be extracted from the engine. Conversely, more torque can be extracted from the engine if prevailing wear of the clutch is below said predetermined threshold value.

The method is easy to implement in existing motor vehicles. Software pertaining to a parallel hybrid system for propulsion of a motor vehicle comprising a combustion engine in combination with an electrical machine configuration which includes an electrical machine provided with power supply may be installed in a control unit of the vehicle during the manufacture of the vehicle. A purchaser of the vehicle may thus have the possibility of selecting the function of the method as an option. Alternatively, software containing programme code for applying the innovative method pertaining to a parallel hybrid system for propulsion of a motor vehicle comprising a combustion engine in combination with an electrical machine configuration which includes an electrical machine provided with power supply may be installed in a control unit of the vehicle on the occasion of upgrading at a service station, in which case the software may be loaded into a memory in the control unit.

The method is inexpensive to implement in that no extra components such as sensors need be installed. Relevant equipment is currently already installed in the vehicles.

Software containing programme code for the method pertaining to a parallel hybrid system for propulsion of a motor vehicle comprising a combustion engine in combination with an electrical machine configuration which includes an electrical machine provided with power supply is easy to update or replace. Different parts of the software containing said programme code may also be replaced independently of one another. This modular configuration is advantageous from a maintenance perspective.

An aspect of the invention proposes a parallel hybrid system for propulsion of a motor vehicle comprising a combustion engine in combination with an electrical machine configuration which includes an electrical machine provided with power supply. The parallel hybrid system may comprise means for controlling the use of both the combustion engine and the electrical machine of the electrical machine configuration to propel the vehicle during an initial movement phase of its propulsion.

Said initial movement phase may refer to a state before full propulsion takes place with chosen gear in the vehicle's power train, i.e. when the clutch has substantially finished sliding. Said initial movement phase may comprise the vehicle being stationary.

The electrical machine of the electrical machine configuration may be adapted to acting upon an input shaft of a gearbox in the vehicle's power train, and vice versa.

The parallel hybrid system may further comprise means for continuously distributing torque extracted respectively from the combustion engine and said electrical machine on the basis of the speed of the electrical machine.

The parallel hybrid system may further comprise means for continuously distributing torque extracted respectively from the combustion engine and said electrical machine on the basis of a prevailing state of an energy store of the electrical machine configuration.

The parallel hybrid system may further comprise means for continuously distributing torque extracted respectively from the combustion engine and said electrical machine on the basis of a prevailing temperature of the electrical machine of the electrical machine configuration.

The parallel hybrid system may further comprise means for continuously distributing torque extracted respectively from the combustion engine and said electrical machine on the basis of a prevailing temperature of a clutch in the vehicle's power train.

The parallel hybrid system may further comprise means for continuously distributing torque extracted respectively from the combustion engine and said electrical machine on the basis of prevailing wear of a clutch in the vehicle's power train.

The above objects are also achieved with a motor vehicle provided with the innovative parallel hybrid system. The vehicle may be a truck, bus or car.

An aspect of the invention is a proposed computer programme for a method pertaining to a parallel hybrid system for propulsion of a motor vehicle comprising a combustion engine in combination with an electrical machine configuration which includes an electrical machine provided with power supply, which programme contains programme code stored on a computer-readable medium for causing an electronic control unit or another computer connected to the electronic control unit to perform steps according to any one of claims 1-8.

An aspect of the invention is a proposed computer programme for a method pertaining to a parallel hybrid system for propulsion of a motor vehicle comprising a combustion engine in combination with an electrical machine configuration which includes an electrical machine provided with power supply, which programme contains programme code for causing an electronic control unit or another computer connected to the electronic control unit to perform steps according to any one of claims 1-8.

An aspect of the invention is a proposed computer programme product containing a programme code stored on a computer-readable medium for performing method steps according to any one of claims 1-8 when said programme is run on an electronic control unit or another computer connected to the electronic control unit.

Further objects, advantages and novel features of the present invention will become apparent to one skilled in the art from the following details, and also by applying the invention. Although the invention is described below, it should be noted that it is not limited to the specific details described. One skilled in the art who has access to the teachings herein will recognise further applications, modifications and incorporations within other fields, which are within the scope of the invention.

BRIEF DESCRIPTION OF THE DRAWINGS

Fuller understanding of the present invention and further objects and advantages of it may be gained by reading the following detailed description in conjunction with the accompanying drawings, in which the same reference notations pertain to similar items in the various diagrams, and in which:

> Figure 1 illustrates schematically a vehicle according to an embodiment of the invention;
> Figure 2 illustrates schematically a parallel hybrid system for the vehicle depicted in Figure 1, according to an embodiment of the invention;
> Figure 3 is a schematic diagram illustrating an aspect of the invention;
> Figure 4a is a schematic flowchart of a method according to an embodiment of the invention;
> Figure 4b is a more detailed schematic flowchart of a method according to an embodiment of the invention; and
> Figure 5 illustrates schematically a computer according to an embodiment of the invention.

DETAILED DESCRIPTION OF THE DRAWINGS

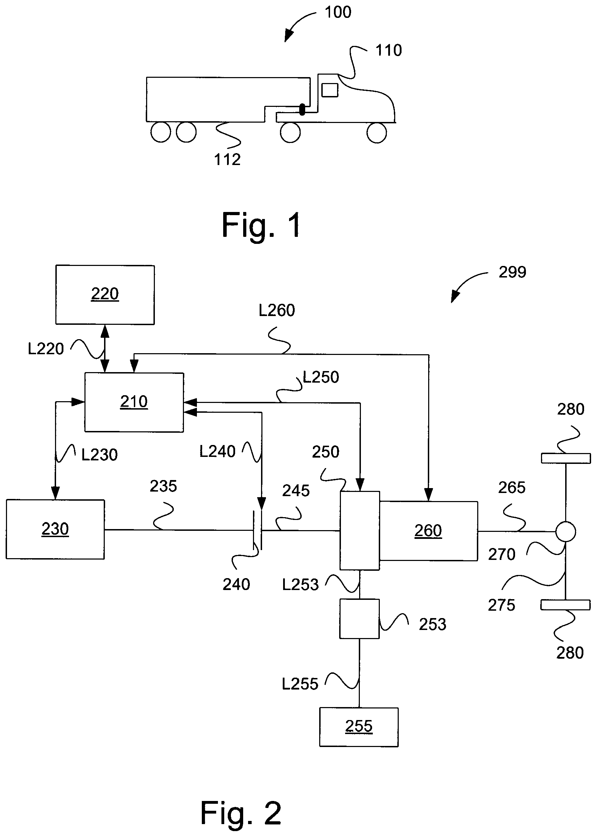

Figure 1 depicts a side view of a vehicle 100. The vehicle exemplified comprises a tractor unit 110 and a semitrailer 112. It may be a heavy vehicle, e.g. a truck or a bus. It may alternatively be a car.

The term "link" refers herein to a communication link which may be a physical line such as an opto-electronic communication line, or a non-physical line such as a wireless connection, e.g. a radio link or microwave link.

Figure 2 depicts a parallel hybrid system 299 of the vehicle 100. The parallel hybrid system is situated in the tractor unit 110.

The parallel hybrid system 299 comprises a combustion engine 230 which has an output shaft 235 connected to a clutch 240. The clutch may be any suitable clutch. It may be a sliding clutch with pressure discs and plates. It may in one version be implemented as a so-called lock-up function in a torque converter in cases where the vehicle's transmission has an automatic gearbox. The clutch 240 is connected to an input shaft 245 of a gearbox 260. The gearbox has an output shaft 265 connected to a torque distributor 270 for conveying power to a number of powered wheels 280 via respective driveshafts 275.

The parallel hybrid system 299 further comprises an electrical machine configuration comprising an electrical machine 250 associated with the gearbox input shaft 245. The electrical machine 250 is connected electrically to an energy store 255. The electrical machine may in one example be suited to an operating power of 60-120 kW. The energy store 255 may be of any suitable kind. It may in one example be a battery of any suitable kind, e.g. a lithium ion battery. The battery may alternatively be for example an NiMH battery. In another example the energy store may be an electrochemical energy store, e.g. an electrochemical capacitor known as SuperCap. Said energy store is herein exemplified with a battery of conventional kind for parallel hybrid systems.

In one version, the electrical machine 250 is adapted to being supplied with power by said energy store 255 and thereby serving as a motor in the vehicle's power train to impart driving torque to the gearbox input shaft 245. In one version the electrical machine 250 is adapted to serving as a generator of the electrical machine configuration and thereby charging the energy store 255 during braking of the vehicle 100. Said electrical machine 250 may typically run alternately as motor and generator.

In the version of this example the battery 255 is connected electrically to an electrical rectifier 253 by a cable L255. The rectifier 253 is adapted to converting DC voltage supplied from the battery via the cable L255 to a desired suitable three-phase voltage. In alternative versions of the invention, electrical machines herein described may be run with any desired number of phases, e.g. one phase or two phases. The rectifier 253 is adapted to supplying said three-phase voltage to the electrical machine 250 via a cable L253 to power and run the electrical machine. Said DC voltage may amount to several hundred volts, e.g. 400 volts or 600 volts.

Said electrical machine configuration comprises said electrical machine 250, rectifier 253, battery 255 and necessary connections between them.

The rectifier 253 is arranged accordingly so that during braking of the vehicle it converts to DC voltage a three-phase voltage generated from the electrical machine 250 and supplied to the rectifier. The rectifier 253 is arranged to supply said DC voltage to the battery 255 via the cable L255 to charge the battery.

A component configuration comprising the electrical machine 250, the cable L253, the rectifier 253, the cable L255 and the energy store 255 is herein called the electrical machine configuration. It should be noted that different versions of said configuration are feasible. In one version the energy store 255 and the rectifier 253 may be manufactured as an integrated unit which is connected electrically to the electrical machine 250. In another version the rectifier 253 and the electrical machine 250 may be manufactured as an integrated unit which is connected electrically to the energy store 255. In a third version the energy store 255, the rectifier 253 and the electrical machine 250 may be manufactured as an integrated unit.

A first control unit 210 is adapted to determining whether the vehicle is in an initial movement phase or not. In one version of the present invention the first control unit is adapted to activating operation of both the combustion engine 230 and the electrical machine 250 when it is determined that an initial movement phase for propulsion of the vehicle is beginning. In one version, the first control unit is adapted to continuously allowing and controlling the operation of both the engine and the electrical machine during said initial movement phase for propulsion of the vehicle. In one version, the first control unit is adapted to activating stored running routines for the parallel hybrid system when it is determined that the vehicle is no longer in an initial movement phase for its propulsion, and consequently to running the vehicle in a conventional way.

The first control unit 210 is arranged for communication with the engine 230 via a link L230. The first control unit is adapted to controlling the operation of the engine according to stored running routines. It is for example adapted to guiding an engine's prevailing speed (or output shaft torque) towards a demanded speed (or demanded output shaft torque).

The first control unit 210 is arranged for communication with the clutch 240 via a link L240. The first control unit is adapted to controlling the operation of the clutch according to stored running routines. It is for example adapted to opening the clutch, sliding the clutch together and closing the clutch according to said stored routines.

The first control unit 210 is arranged for communication with the electrical machine 250 via a link L250. The first control unit is adapted to controlling the operation of the electrical machine 250 according to stored running routines. Although in Figure 2 the first control unit 210 is connected to the electrical machine 250, it is in practice connected to the rectifier 253. In practice the first control unit is adapted to controlling the electrical machine 250 by means of the rectifier 253. For example, the first control unit is adapted to choosing the running direction for the electrical machine 250 according to said stored routines. This means that the first control unit is adapted to causing the electrical machine 250 to serve as a motor to impart driving torque to the gearbox input shaft 245. It also means that where appropriate the first control unit is adapted to causing the electrical machine 250 to serve as a generator to charge the battery 255.

The first control unit 210 is arranged for communication with the gearbox 260 via a link L260. The first control unit is adapted to controlling the operation of the gearbox according to stored running routines. It is for example adapted to causing different gear steps in the gearbox, including neutral position, according to said stored routines. The gearbox may be a so-called manual gearbox, e.g. a robotised/automated manual gearbox, or an automatic gearbox.

A second control unit 220 is arranged for communication with the first control unit 210 via a link L220. The second control unit 220 may be detachably connected to the first control unit 210. The second control unit 220 may be a control unit external to the vehicle 100. The second control unit may be adapted to effecting the innovative method steps according to the invention. It may be used to cross-load software to the first control unit, particularly software for applying the innovative method. It may alternatively be arranged for communication with the first control unit via an internal network on board the vehicle. The second control unit may for example be adapted to performing substantially similar functions to the first control unit, e.g. controlling the operation of the engine 230, the clutch 240, the electrical machine configuration comprising the electrical machine 250, the rectifier 253 and the battery 255, and the gearbox 260. The second control unit may be adapted to performing substantially similar functions to those of the first control unit, e.g. controlling, during a phase of initial movement of the vehicle, the operation of both the engine 230 and the electrical machine 250 in order to impart to the shaft 245 a driving torque which may have components from the engine and the electrical machine.

It should be noted that certain of the above functions may be performed by the first control unit 210 and certain of them by the second control unit 220.

In one embodiment a temperature sensor (not depicted) is provided to continuously detect a prevailing temperature T1 of the battery 255. This sensor is adapted to continuously sending to the first control unit 210 via a link (not depicted) signals which contain information about a prevailing temperature of the battery. Said detected temperature T1 may be used as a parameter for controlling the operation of the vehicle during an initial movement phase according to one aspect of the invention.

In one embodiment a prevailing temperature T1 of the battery 255 may be estimated in a suitable way. In one embodiment the first control unit 210 may be adapted to continuously calculating a prevailing temperature T1 of the battery on the basis of a model stored in it.

In one embodiment, state means (not depicted) are provided to continuously detect a prevailing level of charge and/or degree of ageing of the battery 255. These means are adapted to continuously sending to the first control unit 210 via a link (not depicted) signals which contain information about a prevailing level of charge and/or degree of ageing of the battery. Said detected level of charge and/or degree of ageing may be used as parameters for controlling the operation of the vehicle during an initial movement phase according to one aspect of the invention. The state means may be adapted to suitably measuring a level of charge and/or degree of ageing of the battery.

In one embodiment a level of charge and/or degree of ageing of the battery 255 may be estimated in a suitable way. In one embodiment the first control unit 210 may be adapted to continuously calculating a level of charge and/or degree of ageing of the battery on the basis of a model stored in it.

In one embodiment a temperature sensor (not depicted) is provided to continuously detect a prevailing temperature Tel of the electrical machine 250. This sensor is adapted to continuously sending to the first control unit 210 via a link (not depicted) signals which contain information about a prevailing temperature of the electrical machine. Said detected temperature Tel may be used as a parameter for controlling the operation of the vehicle during an initial movement phase according to one aspect of the invention.

In one embodiment a prevailing temperature Tel of the electrical machine 250 may be estimated in a suitable way. In one embodiment the first control unit 210 may be adapted to continuously calculating a prevailing temperature Tel of the electrical machine on the basis of a model stored in it.

In one embodiment a speed sensor (not depicted) is provided to continuously detect a prevailing speed N of the electrical machine 250. This sensor is adapted to continuously sending to the first control unit 210 via a link (not depicted) signals which contain information about a prevailing speed N. Said detected speed N may be used as a parameter for controlling the operation of the vehicle during an initial movement phase according to one aspect of the invention.

In one embodiment an electrical sensor (not depicted) is provided in the rectifier 253. This sensor is adapted to continuously detecting the electrical machine's induced voltage variations. It is adapted to continuously sending to the first control unit 210 signals which contain information about these induced voltage variations. The first control unit is adapted to continuously determining a prevailing speed N of the electrical machine 250 on the basis of these induced voltage variations. Said speed N determined may be used as a parameter for controlling the vehicle during an initial movement phase according to an aspect of the invention.

In one embodiment a temperature sensor (not depicted) is provided to continuously detect a prevailing temperature T2meas of the clutch 240. This sensor is adapted to continuously sending to the first control unit 210 via a link (not depicted) signals which contain information about a prevailing temperature T2meas of the clutch. Said detected temperature T2meas may be used as a parameter for controlling the operation of the vehicle during an initial movement phase according to one aspect of the invention.

In one embodiment a prevailing temperature T2cal of the clutch 240 may be estimated in a suitable way. In one embodiment the first control unit 210 may be adapted to continuously calculating a prevailing temperature T2cal of the clutch on the basis of a model stored in it. Said calculated temperature T2cal may be used as a parameter for controlling the operation of the vehicle during an initial movement phase according to one aspect of the invention.

In one embodiment a wear sensor (not depicted) is provided to continuously detect prevailing wear of the clutch 240. This sensor is adapted to making a wear measurement Smeas of the clutch. This sensor is adapted to continuously sending to the first control unit 210 via a link (not depicted) signals which contain information about prevailing wear of the clutch. Said detected wear measurement may be used as a parameter for controlling the operation of the vehicle during an initial movement phase according to one aspect of the invention.

In one embodiment prevailing wear Scal of the clutch 240 may be estimated in a suitable way. In one embodiment the first control unit 210 may be adapted to continuously calculating prevailing wear Scal of the clutch on the basis of a model stored in it. Said calculated wear Scal may be used as a parameter for controlling the operation of the vehicle during an initial movement phase according to one aspect of the invention.

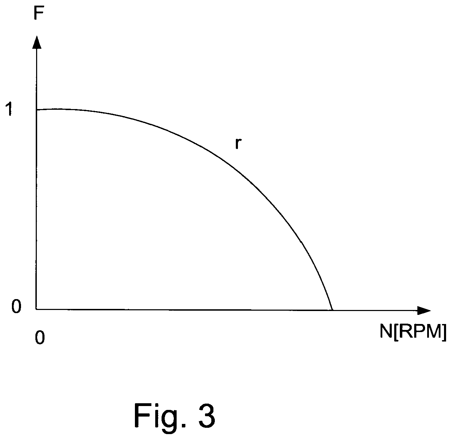

Figure 3 is a schematic diagram in general terms of a version of the present invention.

It illustrates schematically how an operating parameter r depends on a speed N of the electrical machine 250. A torque Tel produced by the electrical machine may be defined as

$$Tel = r \cdot Tstart$$

in which Tstart is a desired torque of the gearbox input shaft.
F is a unitless factor defined by the range [0,1].

A torque Tengine produced by the engine 230 may be defined as

$$Tengine=Tstart-Tel$$

It may be seen that when there is a high prevailing speed N of the electrical machine 250 during an initial movement phase for propulsion of the vehicle there will be a smaller torque contribution Tel from the electrical machine 250.

Conversely, at low speeds N of the electrical machine the torque contribution Tel from it will be larger.

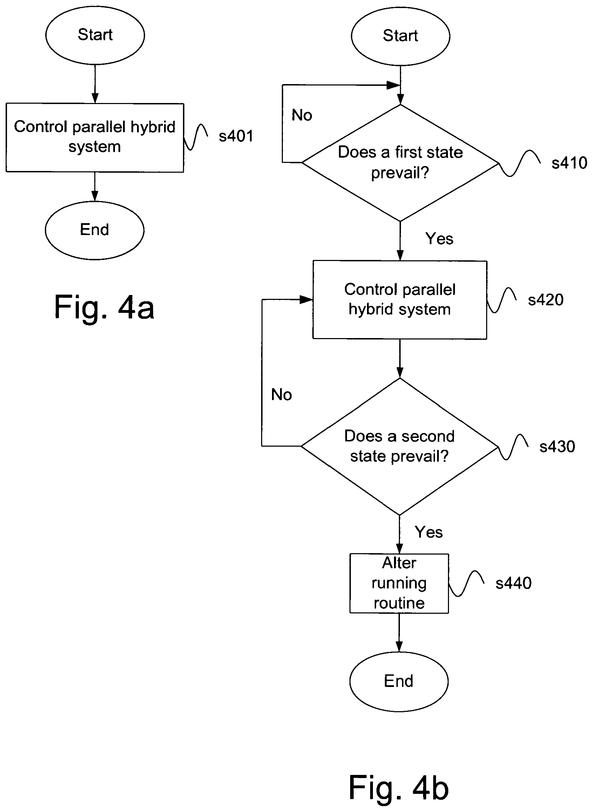

Figure 4a is a schematic flowchart of a method pertaining to a parallel hybrid system for propulsion of a motor vehicle comprising a combustion engine in combination with an electrical machine configuration which includes an electrical machine provided with power supply, according to an embodiment of the invention. The method comprises a first step s401 comprising, during an initial movement phase of the vehicle's propulsion, the step of using both the combustion engine and the electrical machine of the electrical machine configuration to propel the vehicle. The method ends after step s401.

Figure 4b is a schematic flowchart of a method pertaining to a parallel hybrid system 299 for propulsion of a motor vehicle 100 comprising a combustion engine 230 in combination with an electrical machine configuration which includes an electrical machine 250 provided with power supply, according to an embodiment of the invention.

The method comprises a first step s410 of determining whether a first state prevails. Said first state refers to an initial movement phase for propulsion of the vehicle 100. It may for example refer to a state before full propulsion takes place with chosen gear in the vehicle's power train. It may comprise the vehicle being stationary. It may refer to a state in which a clutch 240 in the vehicle's transmission is sliding together. It may comprise a state when the vehicle moves by so-called inching. It may refer to a state from when the vehicle is stationary to when a first chosen gear becomes fully engaged.

If said first state prevails, a next step s420 is performed. If said state does not prevail, step s410 is performed again.

Method step s420 comprises the step, during an initial movement phase of the vehicle's propulsion, of using both the combustion engine and the electrical machine of the electrical machine configuration to propel the vehicle. Step s420 may comprise one or more of the following steps:

a) continuously distributing torque extracted respectively from the engine and said electrical machine on the basis of a prevailing speed N of the electrical machine;

b) continuously distributing torque extracted respectively from the engine and said electrical machine on the basis of a prevailing temperature of an energy store of the electrical machine configuration;

c) continuously distributing torque extracted respectively from the engine and said electrical machine on the basis of a prevailing level of charge of an energy store of the electrical machine configuration;

d) continuously distributing torque extracted respectively from the engine and said electrical machine on the basis of a prevailing degree of ageing of an energy store of the electrical machine configuration;

e) continuously distributing torque extracted respectively from the engine and said electrical machine on the basis of a prevailing temperature of the electrical machine 250 of the electrical machine configuration;

f) continuously distributing torque extracted respectively from the engine and said electrical machine on the basis of a prevailing temperature of a clutch in the vehicle's power train;

g) continuously distributing torque extracted respectively from the engine and said electrical machine on the basis of prevailing wear of a clutch in the vehicle's power train.

Method step s420 is followed by a step s430.

Method step s430 comprises the step of determining whether a second state prevails. Said second state may refer to a driving phase for propulsion of the vehicle 100 which follows said initial movement phase. Said driving phase may for example refer to a state after full propulsion takes place with chosen gear in the vehicle's power train. This driving phase may comprise the vehicle travelling at a speed which exceeds a predetermined value, e.g. 5 km/h or 2 km/h. It may refer to a state in which a clutch 240 in the vehicle's transmission has substantially slid fully together. It may comprise a state in which the vehicle travels in some other way than by so-called inching. The second state may comprise a first chosen gear has become fully engaged after the vehicle has been set in motion from stationary. The first state and the second state are different states which may be defined by any suitable limit, e.g. a predetermined value which represents a prevailing speed of the vehicle or a degree of sliding in of the clutch 240 (e.g. within a range of 95-100%, the clutch being closed at 100%).

If said second state prevails, a subsequent step s440 is performed. If said second state does not prevail, step s420 is performed again.

Method step s440 comprises the step of altering active running routines of the parallel hybrid system 299. This entails cessation of operation according to the innovative method. In one version, operation according to the innovative method proceeds during said initial movement phase only. Thereafter the parallel hybrid system 299 is run in the ordinary way, i.e. in a way which with advantage uses both the engine 230 and the electrical machine configuration which includes the electrical machine 250, separately or simultaneously, to propel the vehicle in a conventional way. The method ends after step s440.

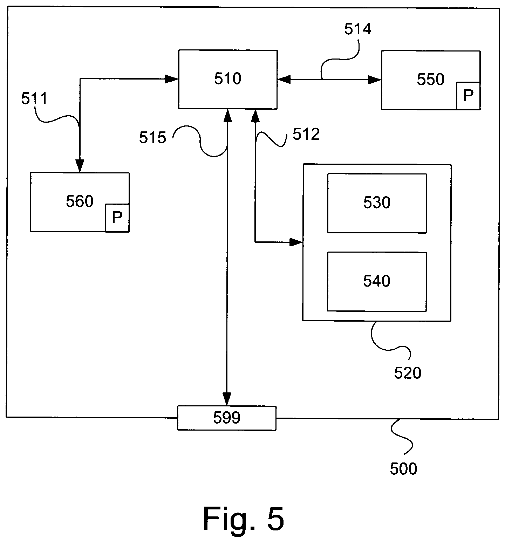

Figure 5 is a diagram of a version of a device 500. The control units 210 and 220 described with reference to Figure 2 may in one version comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

A proposed computer programme P contains routines for using, during an initial movement phase of the vehicle's propulsion, both the engine and the electrical machine of the electrical machine configuration to propel the vehicle according to the innovative method. The programme P contains routines for determining whether the first state described above prevails. The programme P contains routines for determining whether the first state continues to prevail or whether the second state described above prevails. The programme P comprises routines for continuously distributing torque extracted respectively from the engine and said electrical machine on the basis of the electrical machine's speed N. The programme P comprises routines for continuously distributing torque extracted respectively from the engine and said electrical machine on the basis of a prevailing temperature of an energy store of the electrical machine configuration. The programme P comprises routines for continuously distributing torque extracted respectively from the engine and said electrical machine on the basis of a prevailing level of charge of an energy store of the electrical machine configuration. The programme P comprises routines for continuously distributing torque extracted respectively from the engine and said electrical machine on the basis of a prevailing degree of ageing of an energy store of the electrical machine configuration. The programme P comprises routines for continuously distributing torque extracted respectively from the engine and said electrical machine on the basis of a prevailing temperature of the electrical machine 250 of the electrical machine configuration. The programme P comprises routines for continuously distributing torque extracted respectively from the engine and said electrical machine on the basis of a prevailing temperature of a clutch in the vehicle's power train. The programme P comprises routines for continuously distributing torque extracted respectively from the engine and said electrical machine on the basis of prevailing wear of a clutch in the vehicle's power train.

The computer programme P may be stored in an executable form or in compressed form in a memory 560 and/or in a read/write memory 550.

Where it is stated that the data processing unit 510 performs a certain function, it means that the data processing unit effects a certain part of the programme stored in the memory 560 or a certain part of the programme stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit via a data bus 511. The read/write memory 550 is intended to communicate with the data processing unit via a data bus 514. The data port may for example be connected to the links L220, L230, L240, L250 and L260 (see Figure 2).

When data are received on the data port 599, they are stored temporarily in the second memory element 540. When input data received have been temporarily stored, the data processing unit 510 will be ready to effect code execution in a manner described above. In one version, signals received on the data port contain information about a prevailing speed of the electrical machine 250. In one version, signals received on the data port contain information about the electrical machine's induced voltage variations. In one version, signals received on the data port contain information about a prevailing temperature of the battery 255. In one embodiment, signals received on the data port contain information about a level of charge of the battery. In one version, signals received on the data port contain information about a degree of ageing of the battery. In one version, signals received on the data port contain information about a temperature of the electrical machine 250. In one version, signals received on the data port contain information about a prevailing temperature of the clutch 240. In one version, signals received on the data port contain information about a prevailing vehicle speed. In one version, signals received on the data port contain information about prevailing wear of the clutch. In one version, signals received on the data port contain information about a prevailing temperature of the clutch. In one version, signals received on the data port contain information about a state of the clutch. This clutch state may comprise any of the states which represent the clutch fully open, the clutch to some extent slipping or the clutch fully closed. The signals received on the data port may be used by the device 500 to determine whether said first state prevails. The signals received on the data port may be used by the device 500 to determine whether said second state prevails.

Parts of the methods herein described may be applied by the device 500 by means of the data processing unit 510 which runs the programme stored in the memory 560 or the read/write memory 550. When the device 500 runs the programme, methods herein described are executed.

The foregoing description of the preferred embodiments of the present invention is provided for illustrative and descriptive purposes. It is not intended to be exhaustive, nor to limit the invention to the variants described. Many modifications and variations will obviously suggest themselves to one skilled in the art. The embodiments have been chosen and described in order best to explain the principles of the invention and its practical applications and hence to make it possible for one skilled in the art to understand the invention for various embodiments and with the various modifications appropriate to the intended use.

**Claims**

1. A method pertaining to a parallel hybrid system (299) for propulsion of a motor vehicle (100; 110) comprising a combustion engine (230) in combination with an electrical machine configuration (250, 253, 255) which includes an electrical machine (250) provided with power supply, comprising the step, during an initial movement phase of the vehicle's propulsion, of using both the combustion engine (230) and the electrical machine (250) of the electrical machine configuration to propel the vehicle (100; 110), wherein the initial movement phase comprises a state when a clutch in the power train is sliding together, **characterised by** the step,

   - during said initial movement phase, of continuously distributing torque extracted respectively from the combustion engine (230) and said electrical machine (250) on the basis of the electrical machine's speed (N).

2. A method according to claim 1, in which said initial movement phase refers to a state before full propulsion takes place with chosen gear in the vehicle's power train.

3. A method according to any one of claims 1 or 2, in which said initial movement phase comprises the vehicle being stationary.

4. A method according to any one of claims 1-3, in which the electrical machine (250) of the electrical machine configuration acts upon an input shaft (245) of a gearbox (260) in the vehicle's power train, and vice versa.

5. A method according to any one of claims 1-4, further comprising the step of

   - continuously distributing torque extracted respectively from the combustion engine (230) and said electrical machine (250) on the basis of a prevailing state (T1) of an energy store of the electrical machine configuration (250, 253, 255).

6. A method according to any one of claims 1-5, further comprising the step of

   - continuously distributing torque extracted respectively from the combustion engine (230) and said electrical machine (250) on the basis of a prevailing temperature (Tel) of the electrical machine (250) of the electrical machine configuration (250, 253, 255).

7. A method according to any one of claims 1-6, further comprising the step of

   - continuously distributing torque extracted respectively from the combustion engine (230) and said electrical machine (250) on the basis of a prevailing temperature (T2cal, T2meas) of a clutch (240) in the vehicle's power train.

8. A method according to any one of claims 1-7, further comprising the step of

   - continuously distributing torque extracted respectively from the combustion engine (230) and said electrical machine (250) on the basis of prevailing wear of a clutch (240) in the vehicle's power train.

9. A parallel hybrid system (299) for propulsion of a motor vehicle (100; 110) comprising a combustion engine (230) in combination with an electrical machine configuration (250, 253, 255) which includes an electrical machine (250) provided with power supply, and means (210; 220; 500) for controlling the use of both the combustion engine (230) and the electrical machine (250) of the electrical machine configuration to propel the vehicle (100; 110) during an initial movement phase of its propulsion, wherein the initial movement phase comprises a state when a clutch in the power train is sliding together, **characterised by**

   - means (210; 220; 500) for continuously distributing torque extracted respectively from the combustion engine (230) and said electrical machine (250) on the basis of the electrical machine's speed (N).

10. A parallel hybrid system according to claim 9, in which the electrical machine (250) of the electrical machine configuration is adapted to acting upon an input shaft (245) of a gearbox in the vehicle's power train, and vice versa.

11. A parallel hybrid system according to claim 9 or 10, further comprising

   - means (210; 220; 500) for continuously distributing torque extracted respectively from the combustion engine (230) and said electrical machine (250) on the basis of a prevailing state (T1) of an energy store of the electrical machine configuration (250, 253, 255).

12. A parallel hybrid system according to any one of claims 9-11, further comprising

    - means (210; 220; 500) for continuously distributing torque extracted respectively from the combustion engine (230) and said electrical machine (250) on the basis of a prevailing temperature (Tel) of the electrical machine (250) of the electrical machine configuration (250, 253, 255).

13. A parallel hybrid system according to any one of claims 9-12, further comprising

    - means (210; 220; 500) for continuously distributing torque extracted respectively from the combustion engine (230) and said electrical machine (250) on the basis of a prevailing temperature (T2cal, T2meas) of a clutch (240) in the vehicle's power train.

14. A parallel hybrid system according to any one of claims 9-13, further comprising

    - means (210; 220; 500) for continuously distributing torque extracted respectively from the combustion engine (230) and said electrical machine (250) on the basis of prevailing wear of a clutch (240) in the vehicle's power train.

15. A vehicle (100; 110) provided with a parallel hybrid system (299) according to any one of claims 9-14.

16. A vehicle (100; 110) according to claim 15 which is any from among a truck, bus or car.

17. A computer programme (P) pertaining to a parallel hybrid system (299) for propulsion of a motor vehicle (100; 110) comprising a combustion engine (230) in combination with an electrical machine configuration (250, 253, 255) which includes an electrical machine (250) provided with power supply, which computer programme (P) contains programme code for causing an electronic control unit (210; 500) or another computer (220; 500) connected to the electronic control unit (210; 500) to perform steps according to any one of claims 1-8.

18. A computer programme product containing a programme code stored on a computer-readable medium for performing method steps according to any one of claims 1-8 when said computer programme is run on an electronic control unit (210; 500) or another computer (220; 500) connected to the electronic control unit (210; 500).

**Patentansprüche**

1. Verfahren betreffend ein Parallelhybridsystem (299) zum Antrieb eines Kraftfahrzeugs (100; 110) mit einem Verbrennungsmotor (230) in Kombination mit einer elektrischen Maschinenkonfiguration (250, 253, 255), die eine mit einer Energieversorgung versehene elektrische Maschine (250) enthält, umfassend den Schritt, während einer anfänglichen Bewegungsphase des Fahrzeugvortriebs, des Verwendens sowohl des Verbrennungsmotors (230) als auch der elektrischen Maschine (250) der elektrischen Maschinenkonfiguration zum Antreiben des Fahrzeugs (100; 110), wobei die anfängliche Bewegungsphase einen Zustand umfasst, in dem eine Kupplung in dem Antriebsstrang sich schließt, **gekennzeichnet durch** den Schritt

    - während der anfänglichen Bewegungsphase, des kontinuierlichen Verteilens von Drehmoment, das von dem Verbrennungsmotor (230) bzw. der elektrischen Maschine (250) bezogen wird, auf der Basis der Drehzahl (N) der elektrischen Maschine.

2. Verfahren nach Anspruch 1, bei dem die anfängliche Bewegungsphase sich auf einen Zustand bezieht, bevor ein voller Vortrieb mit einem gewählten Gang in dem Fahrzeugantriebsstrang stattfindet.

3. Verfahren nach einem der Ansprüche 1 oder 2, bei dem die anfängliche Bewegungsphase umfasst, dass das Fahrzeug stillsteht.

4. Verfahren nach einem der Ansprüche 1 bis 3, bei dem die elektrische Maschine (250) der elektrischen Maschinenkonfiguration auf eine Eingangswelle (245) eines Getriebes (260) in dem Fahrzeugantriebsstrang wirkt und umgekehrt.

5. Verfahren nach einem der Ansprüche 1 bis 4, ferner umfassend den Schritt des

    - kontinuierlichen Verteilens von Drehmoment, das von dem Verbrennungsmotor (230) bzw. der elektrischen Maschine (250) bezogen wird, auf der Basis eines vorherrschenden Zustands (T1) eines Energiespeichers der elektrischen Maschinenkonfiguration (250, 253, 255).

6. Verfahren nach einem der Ansprüche 1 bis 5, ferner umfassend den Schritt des

    - kontinuierlichen Verteilens von Drehmoment, das von dem Verbrennungsmotor (230) bzw.

der elektrischen Maschine (250) bezogen wird, auf der Basis einer vorherrschenden Temperatur (Tel) der elektrischen Maschine (250) der elektrischen Maschinenkonfiguration (250, 253, 255).

7. Verfahren nach einem der Ansprüche 1 bis 6, ferner umfassend den Schritt des:

- kontinuierlichen Verteilens von Drehmoment, das von dem Verbrennungsmotor (230) bzw. der elektrischen Maschine (250) bezogen wird, auf der Basis einer vorherrschenden Temperatur (T2cal, T2meas) einer Kupplung (240) in dem Fahrzeugantriebsstrang.

8. Verfahren nach einem der Ansprüche 1 bis 7, ferner umfassend den Schritt des:

- kontinuierlichen Verteilens von Drehmoment, das von dem Verbrennungsmotor (230) bzw. der elektrischen Maschine (250) bezogen wird, auf der Basis einer vorhandenen Abnutzung einer Kupplung (240) in dem Fahrzeugantriebsstrang.

9. Parallelhybridsystem (299) zum Antrieb eines Kraftfahrzeugs (100; 110) mit einem Verbrennungsmotor (230) in Kombination mit einer elektrischen Maschinenkonfiguration (250, 253, 255), die eine mit einer Energieversorgung versehene elektrische Maschine (250) aufweist, und einer Einrichtung (210; 220; 500) zur Steuerung der Verwendung sowohl des Verbrennungsmotors (230) als auch der elektrischen Maschine (250) der elektrischen Maschinenkonfiguration zum Antreiben des Fahrzeugs (100; 110) während einer anfänglichen Bewegungsphase seines Vortriebs, wobei die anfängliche Bewegungsphase einen Zustand umfasst, in dem eine Kupplung in dem Antriebsstrang sich schließt, **gekennzeichnet durch**

- eine Einrichtung (210; 220; 500) zum kontinuierlichen Verteilen von Drehmoment, das von dem Verbrennungsmotor (230) bzw. der elektrischen Maschine (250) bezogen wird, auf der Basis der Drehzahl (N) der elektrischen Maschine.

10. Parallelhybridsystem nach Anspruch 9, bei dem die elektrische Maschine (250) der elektrischen Maschinenkonfiguration dazu eingerichtet ist, auf eine Eingangswelle (245) eines Getriebes in dem Fahrzeugantriebsstrang zu wirken und umgekehrt.

11. Parallelhybridsystem nach Anspruch 9 oder 10, ferner umfassend

- eine Einrichtung (210; 220; 500) zum kontinuierlichen Verteilen von Drehmoment, das von dem Verbrennungsmotor (230) bzw. der elektrischen Maschine (250) bezogen wird, auf der Basis eines vorherrschenden Zustands (T1) eines Energiespeichers der elektrischen Maschinenkonfiguration (250, 253, 255).

12. Parallelhybridsystem nach einem der Ansprüche 9 bis 11, ferner umfassend

- eine Einrichtung (210; 220; 500) zum kontinuierlichen Verteilen von Drehmoment, das von dem Verbrennungsmotor (230) bzw. der elektrischen Maschine (250) bezogen wird, auf der Basis einer vorherrschenden Temperatur (Tel) der elektrischen Maschine (250) der elektrischen Maschinenkonfiguration (250, 253, 255).

13. Parallelhybridsystem nach einem der Ansprüche 9 bis 12, ferner umfassend

- eine Einrichtung (210; 220; 500) zum kontinuierlichen Verteilen von Drehmoment, das von dem Verbrennungsmotor (230) bzw. der elektrischen Maschine (250) bezogen wird, auf der Basis einer vorherrschenden Temperatur (T2cal, T2meas) einer Kupplung (240) in dem Fahrzeugantriebsstrang.

14. Parallelhybridsystem nach einem der Ansprüche 9 bis 13, ferner umfassend

- eine Einrichtung (210; 220; 500) zum kontinuierlichen Verteilen von Drehmoment, das von dem Verbrennungsmotor (230) bzw. der elektrischen Maschine (250) bezogen wird, auf der Basis einer vorhandenen Abnutzung einer Kupplung (240) in dem Fahrzeugantriebsstrang.

15. Fahrzeug (100; 110), das mit einem Parallelhybridsystem (299) nach einem der Ansprüche 9 bis 14 versehen ist.

16. Fahrzeug (100; 110) nach Anspruch 15, das ein jegliches aus einem Lastwagen, Bus oder PKW ist.

17. Computerprogramm (P) betreffend ein Parallelhybridsystem (299) zum Antreiben eines Kraftfahrzeugs (100; 110) mit einem Verbrennungsmotor (230) in Kombination mit einer elektrischen Maschinenkonfiguration (250, 253, 255), die eine mit einer Energieversorgung versehene elektrische Maschine (250) aufweist, wobei das Computerprogramm (P) Programmcode enthält, um eine elektronische Steuereinheit (210; 500) oder einen anderen mit der elektronischen Steuereinheit (210; 500) verbundenen Computer (220; 500) dazu zu veranlassen, Schritte nach einem der Ansprüche 1 bis 8 durchzuführen.

**18.** Computerprogrammprodukt mit auf einem computerlesbaren Medium gespeichertem Programmcode zum Durchführen von Verfahrensschritten nach einem der Ansprüche 1 bis 8, wenn das Computerprogramm auf einer elektronischen Steuereinheit (210; 500) oder einem anderen mit der elektronischen Steuereinheit (210; 500) verbundenen Computer (220; 500) ausgeführt wird.

**Revendications**

**1.** Procédé relatif à un système hybride parallèle (299) pour la propulsion d'un véhicule motorisé (100 ; 110) comprenant un moteur à combustion (230) en combinaison avec une configuration de machine électrique (250, 253, 255), qui comprend une machine électrique (250) fournie avec une alimentation électrique, comprenant l'étape, durant une phase de mouvement initiale de la propulsion du véhicule, de l'utilisation à la fois du moteur à combustion (230) et de la machine électrique (250) de la configuration de machine électrique pour propulser le véhicule (100 ; 110), dans lequel la phase de mouvement initiale comprend un état lorsqu'un embrayage dans le groupe motopropulseur patine, **caractérisé par** les étapes,

- durant ladite phase de mouvement initiale, de distribution en continu du couple extrait respectivement du moteur à combustion (230) et de ladite machine électrique (250) sur la base de la vitesse de la machine électrique (N).

**2.** Procédé selon la revendication 1, dans lequel ladite phase de mouvement initiale fait référence à un état avant que la propulsion complète ait lieu avec la vitesse choisie dans le groupe motopropulseur du véhicule.

**3.** Procédé selon l'une quelconque des revendications 1 ou 2, dans lequel ladite phase de mouvement initiale comprend le véhicule étant stationnaire.

**4.** Procédé selon l'une quelconque des revendications 1-3, dans lequel la machine électrique (250) de la configuration de machine électrique agit sur un arbre d'entrée (245) d'une boîte de vitesses (260) dans le groupe motopropulseur du véhicule, et vice versa.

**5.** Procédé selon l'une quelconque des revendications 1-4, comprenant en outre l'étape de

- la distribution en continu du couple extrait respectivement à partir du moteur à combustion (230) et de ladite machine électrique (250) sur la base d'un état prédominant (T1) d'un magasin d'énergie de la configuration de machine électrique (250, 253, 255).

**6.** Procédé selon l'une quelconque des revendications 1-5, comprenant en outre l'étape de

- la distribution en continu du couple extrait respectivement à partir du moteur à combustion (230) et de ladite machine électrique (250) sur la base d'une température prédominante (Tel) de la machine électrique (250) de la configuration de machine électrique (250, 253, 255).

**7.** Procédé selon l'une quelconque des revendications 1-6, comprenant en outre l'étape de

- la distribution en continu du couple extrait respectivement à partir du moteur à combustion (230) et de ladite machine électrique (250) sur la base d'une température prédominante (T2cal, T2meas) d'un embrayage (240) dans le groupe motopropulseur du véhicule.

**8.** Procédé selon l'une quelconque des revendications 1-7, comprenant en outre l'étape de

- la distribution en continu du couple extrait respectivement à partir du moteur à combustion (230) et de ladite machine électrique (250) sur la base d'une usure prédominante d'un embrayage (240) dans le groupe motopropulseur du véhicule.

**9.** Système hybride parallèle (299) pour la propulsion d'un véhicule motorisé (100 ; 110) comprenant un moteur à combustion (230) en combinaison avec une configuration de machine électrique (250, 253, 255), qui comprend une machine électrique (250) fournie avec une alimentation électrique et des moyens (210 ; 220 ; 500) pour la commande de l'utilisation à la fois du moteur à combustion (230) et de la machine électrique (250) de la configuration de machine électrique pour propulser le véhicule (100 ; 110) durant une phase de mouvement initiale de sa propulsion, dans laquelle la phase de mouvement initiale comprend un état lorsqu'un embrayage du groupe motopropulseur patine, **caractérisé par**

- des moyens (210 ; 220 ; 500) pour la distribution en continu du couple extrait respectivement à partir du moteur à combustion (230) et de ladite machine électrique (250) sur la base de la vitesse de la machine électrique (N).

**10.** Système hybride parallèle selon la revendication 9, dans lequel la machine électrique (250) de la configuration de machine électrique est adaptée à l'action sur un arbre d'entrée (245) d'une boîte de vitesses dans le groupe motopropulseur du véhicule, et vice versa.

11. Système hybride parallèle selon la revendication 9 ou 10, comprenant en outre

   - des moyens (210 ; 220 ; 500) pour la distribution en continu du couple extrait respectivement à partir du moteur à combustion (230) et de ladite machine électrique (250) sur la base d'un état prédominant (T1) d'un magasin d'énergie de la configuration de machine électrique (250, 253, 255).

12. Système hybride parallèle selon la revendication 9-11, comprenant en outre

   - des moyens (210 ; 220 ; 500) pour la distribution en continu du couple extrait respectivement à partir du moteur à combustion (230) et de ladite machine électrique (250) sur la base d'une température prédominante (Tel) de la machine électrique (250) de la configuration de machine électrique (250, 253, 255).

13. Système hybride parallèle selon la revendication 9-12, comprenant en outre

   - des moyens (210 ; 220 ; 500) pour la distribution en continu du couple extrait respectivement à partir du moteur à combustion (230) et de ladite machine électrique (250) sur la base d'une température prédominante (T2cal, T2meas) d'un embrayage (240) dans le groupe motopropulseur du véhicule.

14. Système hybride parallèle selon la revendication 9-13, comprenant en outre

   - des moyens (210 ; 220 ; 500) pour la distribution en continu du couple extrait respectivement à partir du moteur à combustion (230) et de ladite machine électrique (250) sur la base d'une usure prédominante d'un embrayage (240) dans le groupe motopropulseur du véhicule.

15. Véhicule à moteur (100 ; 110) fourni avec un système hybride parallèle (299) selon l'une quelconque des revendications 9-14.

16. Véhicule (100 ; 110) selon la revendication 15 qui est l'un quelconque parmi un camion, un autobus ou une voiture.

17. Programme informatique (P) relatif à un système hybride parallèle (299) pour la propulsion d'un véhicule motorisé (100 ; 110) comprenant un moteur à combustion (230) en combinaison avec une configuration de machine électrique (250, 253, 255) qui comprend une machine électrique (250) fournie avec une alimentation électrique, lequel programme informatique (P) contient un code de programme pour amener une unité de commande électronique (210 ; 500) ou un autre ordinateur (220 ; 500) connecté à l'unité de commande électronique (210 ; 500) à exécuter des étapes selon l'une quelconque des revendications 1-8.

18. Produit de programme informatique contenant un code de programme stocké sur un support lisible par ordinateur pour l'exécution des étapes du procédé selon l'une quelconque des revendications 1-8 lorsque ledit programme informatique est exécuté sur une unité de commande électronique (210 ; 500) ou un autre ordinateur (220 ; 500) connecté à l'unité de commande électronique (210 ; 500).

Fig. 1

Fig. 2

Fig. 3

Start

Control parallel hybrid
system                    s401

End

# Fig. 4a

Start

No

Does a first state
prevail?                 s410

Yes

Control parallel
hybrid system            s420

No

Does a second
state prevail?           s430

Yes

Alter
running
routine                  s440

End

# Fig. 4b

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102007055785
- EP 1862364 A
- DE 102007041570 A